# EUROPEAN PATENT SPECIFICATION

(11) **EP 0 663 254 B1**
(45) Date of publication and mention of the grant of the patent: **23.09.1998**
(21) Application number: 94830565.1
(22) Date of filing: 07.12.1994
(51) Int. Cl.: B23D 21/02, B23D 33/08, F15B 15/14, F15B 15/28

(54) **Device for cutting oblong articles, in particular pipes**
Vorrichtung zum Schneiden langer Produkte, insbesondere Rohren
Dispositif pour couper des produits longs, en particulier des tubes

(30) Priority: 07.12.1993 IT BO930235 U
(43) Date of publication of application: 19.07.1995
(73) Proprietor: Amadio, Filippo, I-63040 Folignano (AP) (IT)
(72) Inventor: Amadio, Filippo, I-63040 Folignano (AP) (IT)
(74) Representative: Dall'Olio, Giancarlo

(56) References cited:
- DE-A- 2 547 302
- DE-U- 8 319 218
- FR-A- 2 554 228
- FR-A- 2 573 687
- US-A- 3 754 428

## Description

The present invention relates to a device for cutting oblong articles according to the preamble of claim 1 and as known from US-A-3.754.428.

Furthermore a pipe cutting machine, which includes a cutting tool that performs a complete cutting operation in a single stroke, is known from the Italian Patent No.1.187.054, owned by the Applicant.

That machine includes:
- a clamping group, including a hydraulic cylinder having a stem that bears a mobile jaw provided with a grip pad and positioned beside a similar jaw, that is stationary, also provided with a grip pad facing the previously mentioned grip pad; each one of the two above mentioned grip pads features, on an outer side, a vertical prismatic guide relief that runs in a complementary vertical channel made on the inner side of a respective jaw; the grip pads are obtained from parallelepiped blocks which are machined in coupled relation so as to make a passage therethrough, i.e. half passage in one pad and the other half passage in the other pad, this passage being inclined so as to extend from the upper surfaces to the front surfaces of both the grip pads. The pipe is clamped inside the passage in such a way that the portion to be cut protrudes upward from the upper surfaces of the same pads.
- a tool holder assembly, that includes a hydraulic cylinder having a stem with a blade fixed to its end; the stem pushes the blade towards the portion of pipe to be cut. The stem holding the blade, has its horizontal axis lying in the plane defined by the counter-facing surfaces of the two grip pads, and the blade, while moving, skims over the whole length of the upper surfaces of the two grip pads, so that everything protruding therefrom, like the portion of pipe to be cut, is cut away.

The above mentioned machine is extremely reliable and functional, but it needs its own supporting structure.

Moreover, shape and mutual disposition of the components result in big dimensions so that the machine is not versatile, when connected with other machines and/or devices designed to carry out certain operations on tubes, and in particular, it cannot be operated by a robotized unit.

Document US-A-3.754.428 discloses a method and apparatus for severing tubing using a conventional pointed shearing blade acting in one motion. The normal circular shape of the tubing is deformed in jaws prior to shearing to include a portion projecting outwardly from the exterior surface of the tubing and presenting an apex.

Then, beginning at the apex, the tubing is severed while the projecting portion is simultaneously reshaped to conform substantially with the normal circular shape of the tubing.

The object of the present invention is to provide a device that, in order to cut pipes, follows a sequence of working phases similar to the one of the machine that is subject of the Italian Patent No. 1.187.054.

This device must be limited in size, so that it can be removably fastened to a supporting base that is independent from the same device, and to which certain operative units can be connected, without reducing the reliability and the efficiency of the same device.

Another object of the invention is to provide the device as described above, that moreover can be efficiently used in any orientation by maintaining orientation of the cutting edge in respect to the cutting surface.

Yet a further object of the invention is to optimise clamping action of the clamping group.

What has been just said, is obtained in accordance with the contents of claims.

The characteristic features of the invention are pointed out in the following, with particular reference to the enclosed drawings, in which:
- Figure 1 shows a lateral view of the device that is the subject of the invention;
- Figure 2 shows a plan view of the mentioned device;
- Figure 3 shows a sectional view taken along the line III-III of Figure 2;
- Figure 4 shows a sectional view taken along the line IV-IV of Figure 3;
- Figure 5 shows schematically a plan view of an operating assembly equipped with a series of operative units, among which there are a pair of the proposed devices.

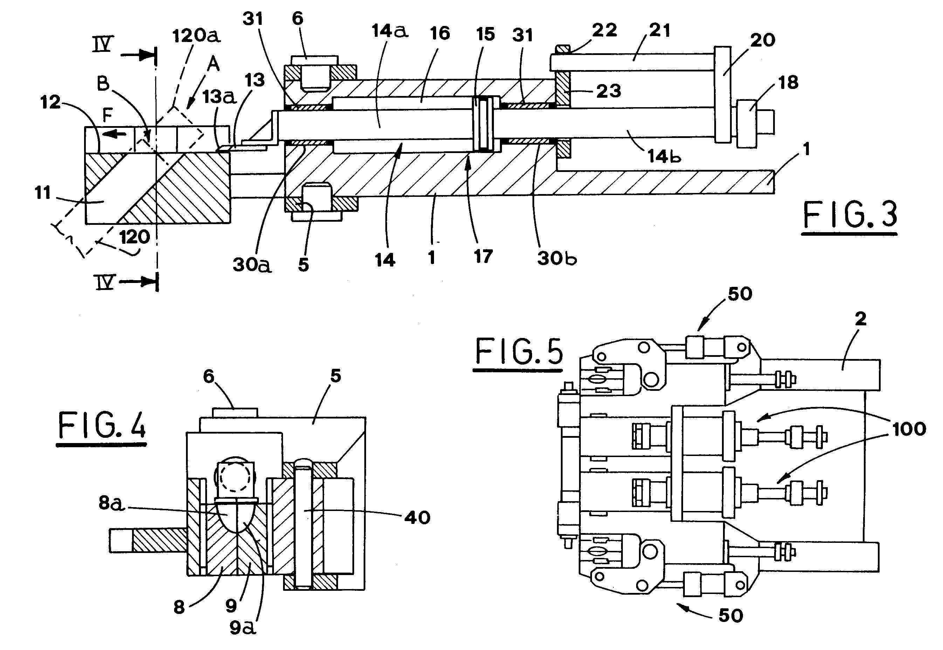

With reference to these Figures, reference numeral 1 indicates a member aimed at being removably fastened, by known means not illustrated (e.g. by pins and bolts), to a special base member, e.g. the one indicated with reference numeral 2 in Figure 5.

One end of said member forms a stationary jaw 3 of a clamp group 10.

The movable jaw 4 of this group 10 is constrained to an L-shaped element 5 that is pivoted in 6 to the member 1.

This constraint is made by a gudgeon 40, the axis of which is parallel to the axis of the pivot 6 (Figure 4), that permits the jaw 4 to oscillate slightly with respect to the axis of the same gudgeon.

The jaw 4 is operated by a hydraulic cylinder 7 hinged with its extremities 7a, 7b respectively to the L-shaped element 5 and to the member 1.

The jaws 3, 4 carry respective grip pads 8, 9 facing each other, having relative grooves 8a, 9a specular to each other with respect to a vertical surface (parallel to the axis of the pivot 6) delimiting, when the jaws 3, 4 are in a clamping position, a through hole (Figure 3) having its axis inclined with respect to the vertical.

The two grip pads 8, 9 form at the top, when they are in the above mentioned clamping position, a horizontal surface 12 (Figure 3) on which a cutting edge 13a of a cutting member 13 (e.g. a blade) slides.

Said cutting member 13 is carried by the outer extremity of a first portion 14a of a horizontal stem 14 that protrudes from the front part of the member 1. The stem 14 features, in its central part, a piston 15 that slides in a chamber 16 made in the member 1.

The assembly stem 14-piston 15-chamber 16 forms an actuator 17 operated, in a known way, by oil under pressure.

When this actuator is operated, the cutting edge slides on the surface 12.

A second portion 14b of the stem 14, i.e. the part without the cutting member 13, protrudes from the rear part of the member 1.

The above mentioned portions 14a, 14b are slidingly guided in holes 30a, 30b extending from the chamber 16, and there are special tight seals 31 between the portions 14a,14b and the extension holes.

Close to the outer extremity of the second portion 14b, there are keyed a reference element 18, detected by a proximity sensor 19 bound to the member (to define the inoperative withdrawn position for the cutting member 13), and a transversal arm 20 carrying a bar 21.

The bar 21, having constant cross section, is turned towards the cutting member 13 and parallel to the axis of the stem 14, so as to be slidingly inserted in a recess 22 made in an element 23 fixed to the member 1.

The assembly arm 22-bar 21-recess 22 prevents the stem 14 from oscillating with respect to its axis: in this way, the space attitude of the cutting member 13 is guaranteed and maintained.

The working of the proposed device clearly appears from the afore mentioned description.

When the jaws 3, 4 are set in open position, as a consequence of rotation in direction K (imposed by the hydraulic actuator means 17) of the L-shaped element 5, a pipe 120 (indicated with broken line in Figure 3) is placed in the hole 11.

A certain section of the upper part 120a of the same pipe protrudes from the upper surface 12; this part 120a can protrude from the surface 12 in any way e.g. according to either the position A or the position B of Figure 3.

In that moment, by operating the hydraulic cylinder 7, the L-shaped element 5 is made rotate in the direction H, so that the clamp group 10 clamps the pipe 120 inserted in the hole 11 between the grip pads 8, 9.

This clamping is optimised by the fact that the grip pad 9 carried by the movable jaw 4 fits perfectly with the other grip pad 8 as a result of the slight oscillation of the jaw 4 with respect to the gudgeon 40.

The hydraulic actuator means 17 is operated in suitable phase relation with the definition of the said clamping, thus provoking the translation of the cutting member 13 in direction F so that the portion 120a of the pipe 120 is cut away from the same pipe.

Upon completition of the movement in the direction F, the supply to the hydraulic actuator means 17 is changed, that results in the cutting member 13 moving back to the withdrawn inoperative position (position that is detected by the sensor 19).

The portion 120a cut off from the pipe has exactly the desired measure, since from one side, the clamp group 10 prevents the pipe from rotating in respect with the hole 11, and from the other side, the pipe is cut off along the surface 12, as the cutting member 13 cannot oscillate because of anti-rotating action performed on the shaft 14 by the assembly arm 20-bar 21-recess 22.

That allows also to optimise the cutting phase since the orientation of the cutting edge 13a in respect to the surface 12 is maintained.

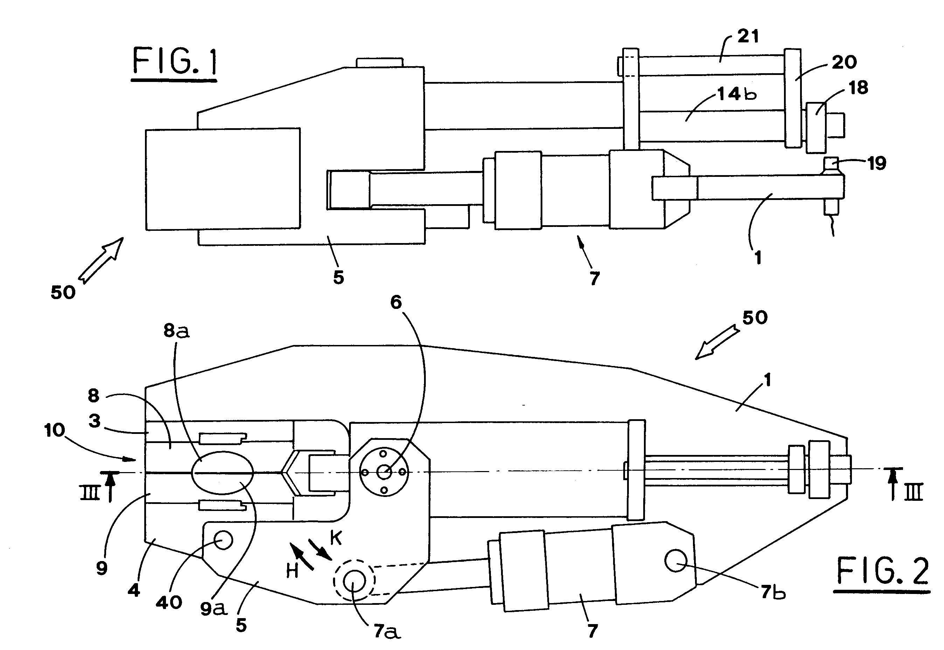

The proposed device, indicated with the reference number 50, is extremely compact, not encumbering (see Figures 1 and 2) and extremely versatile, for it can be easily and rapidly fastened to a special base element 2, e.g. by means of special pins and bolts (see as the example Figure 5, in which the base element 2 has joined thereto two devices 50 as well as other operative units 100, e.g. of the type designed to widen the pipes ends).

The proposed device, due to its shape, can be efficiently used in any orientation; therefore it can be used in a universal way, e.g. fastened to an arm of a robot with six axes, so as to act on both the ends of the pipe in order to cut it, no matter of the orientation angle with respect thereto.

It is obvious that the proposed device is universal, because it allows to perform cutting off orientated in a prefixed way with respect to the pipe axis, and independently from the pipe section: it is sufficient to use two grip pads 8, 9 featuring grooves 8a, 9a able to meet a particular need.

## Claims

1. Device for cutting oblong articles, in particular pipes, including:
a clamp group (10) including two jaws, namely a stationary jaw (3) and a mobile jaw (4), that carry respective grip pads (8,9) featuring relative grooves (8a,9b), specular in respect to a vertical plane and that form, in a close position of the said jaws, a through hole (11) having its axis inclined with respect to the vertical, with said grip pads aimed at gripping an oblong article (120) situated in the said hole (11) and protruding therefrom for a certain portion (120a) delimited by the horizontal surface (12) of the same grip pads;
a cutting member (13) activated horizontally according to back and forth motion over the said horizontal surface (12) and whose cutting edge (13a) slides on the said horizontal surface (12) in order to cut off the cited portion (120a) of the said article (120) protruding from the same surface;
a base element (2) to which the device is fastened;
a member (1), removably fastened to said base element (2), that extends in form of a stationary jaw (3);
an L-shaped element, bearing the said mobile jaw (4), pivoted to the said member (1) with its pivot axis (6) parallel to the said vertical plane;
a hydraulic cylinder (7) having one end (7b) articulated to the said member (1) and the other end (7a) articulated to the said L-shaped element (5), so as to impose the opening and closing of the said clamp group (10) as a consequence of activation of hydraulic cylinder;
said device being characterised in that said member (1) features a chamber (16), in which an hydraulic actuator means (17) slides for operation of the said cutting member (13), and two coaxial extension holes (30a,30b), with said actuator means (17) including a piston (15), sliding inside said chamber (16), and a stem (14) formed by two portions (14a,14b) bound to the said piston (15) and slidingly guided within said extension holes (30a,30b), with relative tight seals (31) set therebetween, with a first one of the said portions (14a) protruding from a front part of the said member (1) to support the said cutting member (13), while a second one of the said portions (14b) protrudes from the said member (1) on a rear part thereof and is provided with a transversal arm (20), keyed to its end, carrying a bar (21) with constant section turned toward the said cutting member (13) so as to be parallel to the axis of the said stem (14), said bar (21) being inserted slidingly in a recess (22) made in an element (23) fixed to the member (1).

2. Device, according to claim 1, characterised in that it has a sensor (19) aimed at detecting the withdrawn inoperative position of the said cutting member (13).

## Patentansprüche

1. Vorrichtung zum Schneiden länglicher Gegenstände, insbesondere von Rohren, mit:
einer Spanngruppe (10) mit zwei Backen, und zwar einem stationären Backen (3) und einem beweglichen Backen (4), die entsprechende Griffbeläge (8, 9) tragen, welche relative Ausnehmungen (8a, 9b) insbesondere bezüglich einer vertikalen Ebene aufweisen, die in einer Schließstellung der Backen ein Durchgangsloch (11) bilden, dessen Achse bezüglich der Vertikalen geneigt ist, wobei die Griffbeläge zum Erfassen eines länglichen Gegenstandes (120) dienen, der in dem Durchgangsloch (11) angeordnet ist und mit einem bestimmten Abschnitt (120a), der von der horizontalen Fläche (12) der Griffbeläge begrenzt wird, aus diesem vorsteht;
einem Schneidköprer (13), der in horizontaler Richtung über die besagte horizontale Fläche (12) vor und zurück bewegbar ist und dessen Schneidkante (13a) auf der horizontalen Fläche (12) gleitet, um den über diese Fläche vorstehenden genannten Abschnitt (120a) des Gegenstandes (120) abzuschneiden;
einem Basiselement (2), an dem die Vorrichtung befestigt ist;
einem Bauteil (1), das an dem Basiselement (2) lösbar befestigt ist, welches in Form eines stationären Backens (3) verläuft;
einem L-förmigen Element, das den beweglichen Backen (4) trägt und mit dem besagten Bauteil (1) schwenkbar verbunden ist, wobei die Schwenkachse (6) parallel zu der vertikale Ebene verläuft;
einem Hydraulikzylinder (7), dessen eines Ende (7b) an dem besagten Bauteil (1) angelenkt ist und dessen anderes Ende (7a) an dem L-förmigen Element (5) angelenkt ist, um die Spanngruppe (10) durch Betätigen des Hydraulikzylinders zu öffnen und zu schließen;
wobei die Vorrichtung dadurch gekennzeichnet ist, daß das besagte Bauteil (1) aufweist:
eine Kammer (16), in der ein hydraulisches Betätigungsmittel (17) gleitet, um den Schneidkörper (13) zu betätigen, sowie zwei koaxial verlaufende Bohrungen (30a, 30b), wobei das Betätigungsmittel (17) einen in der Kammer (16) gleitenden Kolben (15) und einen Schaft (14) aufweist, der von zwei Abschnitten (14a, 14b) gebildet wird, die mit dem Kolben (15) verbunden sind und in den Bohrungen (30a, 30b) gleitend geführt sind, wobei relativ enge Dichtungen (31) dazwischen eingesetzt sind, wobei ein erster der besagten Abschnitte (14a) aus einem vorderen Teil des besagten Bauteils (1) vorsteht, um den Schneidkörper (13) abzustützen, während ein zweiter der besagten Abschnitte (14b) aus dem besagten Bauteil (1) an einem hinteren Teil desselben vorsieht und mit einem an dessen Ende festgelegten Querarm (20) versehen ist, der eine Stange (21) konstanten Querschnitts trägt, die dem Schneidkörper (13) zugewandt ist, so daß sie parallel zur Achse des Schaftes (14) verläuft, wobei die Stange (21) gleitend in eine Ausnehmung (22) eines Elementes (23) eingesetzt ist, das an dem Bauteil (1) festgelegt ist.

2. Vorrichtung nach Anspruch 1, dadurch gekennzeichnet, daß sie einen Sensor (19) zum Detektieren der abgezogenen Außerbetriebsstellung des Schneidkörpers (13) aufweist.

## Revendications

1. Dispositif pour couper des articles allongés, en particulier des tubes, comportant :
un ensemble de serrage (10) comportant deux mâchoires, à savoir une mâchoire fixe (3) et une mâchoire mobile (4), qui portent des blocs de serrage (8, 9) respectifs présentant des rainures correspondantes (8a, 9a), s'étendant de manière spéculaire par rapport à un plan vertical et qui forment, dans une position fermée desdites mâchoires, un trou traversant (11) ayant son axe incliné par rapport à la verticale, lesdits blocs de serrage étant destinés à serrer un article allongé (120) disposé dans ledit trou (11) et en saillie hors de celui-ci sur une certaine partie (120a) délimitée par la surface horizontale (12) de ces mêmes blocs de serrage ;
un organe de coupe (13) actionné horizontalement selon un mouvement d'aller et retour sur ladite surface horizontale (12) et dont un bord de coupe (13a) glisse sur ladite surface horizontale (12) afin de découper la partie mentionnée (120a) dudit article (120) en salle depuis la même surface ;
un élément de base (2) auquel le dispositif est solidarisé ;
un organe (1) solidarisé de manière amovible audit élément de base (2), qui s'étend sous la forme d'une mâchoire fixe (3) ;
un élément profilé en L, portant ladite mâchoire mobile (4), pivotant par rapport audit élément (1) avec son axe de pivotement (6) parallèle audit plan vertical ;
un cylindre hydraulique ayant une extrémité (7b) articulée audit organe (1) et l'autre extrémité (7a) articulée audit élément profilé en L (5), afin de provoquer l'ouverture et la fermeture dudit ensemble de serrage (12) en conséquence de l'actionnement du cylindre hydraulique ;
ledit dispositif étant caractérisé en ce que ledit organe (1) présente une chambre (16), dans laquelle des moyens d'actionnement hydraulique (17) coulissent pour la mise en mouvement dudit organe de coupe (13), et deux trous d'extension (30a, 30b) coaxiaux avec lesdits moyens d'actionnement (17) comportant un piston (15), coulissant à l'intérieur de ladite chambre (16), et une tige (14) formée par deux parties (14a, 14b) fixées audit piston (15) et guidées en coulissement par lesdits trous d'extension (30a, 30b), avec des garnitures d'étanchéité (31) interposées, une première desdites parties (14a) étant en saillie depuis une partie avant dudit organe (1) pour supporter ledit organe de coupe (13), tandis qu'une seconde desdites parties (14b) est en saillie depuis ledit organe (1) sur une partie arrière de celui-ci et est prévue avec un bras transversal (20) verrouillé à son extrémité, portant une barre (21) ayant une section constante tournée vers ledit organe de coupe (13) de façon à être parallèle à l'axe de ladite tige (14), ladite barre (21) étant insérée de manière coulissante dans un logement (22) réalisé dans un élément (23) fixé à l'organe (1).

2. Dispositif selon la revendication 1 caractérisé en ce qu'il comporte un capteur (19) destiné à détecter la position inactive de retrait dudit organe de coupe (13).
